# EUROPÄISCHE PATENTANMELDUNG

(11) **EP 2 180 296 A1**
(43) Veröffentlichungstag der Anmeldung: **28.04.2010**
(21) Anmeldenummer: 08167105.9
(22) Anmeldetag: 21.10.2008
(51) Int. Cl.: G01D 5/14, G01D 5/20, B62D 15/02

(54) **Drehwinkelbestimmungsvorrichtung, insbesondere für die Lenkungswelle eines Kraftfahrzeugs**

(71) Anmelder: Hella KGaA Hueck & Co., 59552 Lippstadt (DE)
(72) Erfinder: Labahn, Nils, 59557 Lippstadt (DE); Irle, Henning, 59557 Lippstadt (DE); Wesselink, Harm, 59555 Lippstadt (DE); Tofall, Michael, 59556 Lippstadt (DE); Saure, Mario, 59557 Lippstadt (DE)

(57) **Zusammenfassung**

Die vorliegende Erfindung betrifft eine Drehwinkelbestimmungsvorrichtung (1) zur Bestimmung der Drehwinkelstellung einer drehbewegten Welle (10). Diese umfasst einen mit der drehbewegten Welle (10) gekoppelter Hauptrotor (11), an dem zur Bestimmung der Drehwinkelstellung des Hauptrotors (11) eine erste Sensoreinheit (12) angeordnet ist, und einen mit dem Hauptrotor (11) drehgekoppelter Zusatzrotor (13), an dem zur Bestimmung der Drehwinkelstellung des Zusatzrotors (13) eine zweite Sensoreinheit (14) angeordnet ist. Erfindungsgemäß ist vorgesehen, dass die Sensoreinheiten (12, 14) mindestens einen induktiv wirkenden Sensor und mindestens einen magnetisch wirkenden Sensor aufweisen.

## Beschreibung

Die vorliegende Erfindung richtet sich auf eine Drehwinkelbestimmungsvorrichtung zur Bestimmung der Drehwinkelstellung einer drehbewegten Welle. Die Vorrichtung besitzt einen mit der drehbewegten Welle gekoppelten Hauptrotor, an dem zur Bestimmung der Drehwinkelstellung des Hauptrotors eine erste Sensoreinheit angeordnet ist. Ferner besitzt die Vorrichtung einen mit dem Hauptrotor drehgekoppelten Zusatzrotor, an dem zur Bestimmung der Drehwinkelstellung des Zusatzrotors eine zweite Sensoreinheit angeordnet ist.

Eine gattungsbildende Drehwinkelbestimmungsvorrichtung ist aus der EP 0 389 669 A1 bekannt. Die hierin beschriebene Vorrichtung dient zur Bestimmung der Drehwinkelstellung einer drehbewegten Welle, die als Lenkungswelle für ein Kraftfahrzeug ausgeführt ist. Die erste Sensoreinheit und die zweite Sensoreinheit sind jeweils als Potentiometer ausgebildet. Das erste Potentiometer ist direkt mit der drehbewegten Welle gekoppelt, wobei das Potentiometer einen Schleifer und eine Schleifbahn besitzt, so dass der Schleifer mit dem Hauptrotor mitdreht. Die Schleifbahn ist in der Vorrichtung ruhend angeordnet, so dass bei einer Drehbewegung der Welle der Schleifer über die Schleifbahn bewegt wird. Mit dem Hauptrotor ist ein Zusatzrotor über einen Zahnriemen gekoppelt. Bei Rotation des Hauptrotors führt der Zusatzrotor ebenfalls eine Rotation aus, wobei das zweite mit dem Zusatzrotor betriebene Potentiometer ebenfalls einen Schleifer aufweist, der über eine ruhend angeordnete Schleifbahn bewegt wird.

Aus der DE 10 2004 011 125 A1 ist eine weitere Drehwinkelbestimmungsvorrichtung zur Bestimmung der Drehwinkelstellung einer drehbewegten Welle bekannt. Die Vorrichtung umfasst ebenfalls einen Hauptrotor und einen mit dem Hauptrotor drehgekoppelten Zusatzrotor. Am Hauptrotor ist eine erste Sensoreinheit angeordnet, die eine mit n Polpaaren ausgebildete Magnetspur besitzt, wobei eine zweite Sensoreinheit am Zusatzrotor mit einer k Polpaare aufweisende Magnetspur vorgesehen ist. Ferner sind digitale Magnetfeldschalter vorhanden, die zur Abtastung der ersten Magnetspur dienen, wobei ferner lineare Magnetfeldsensoren zur Abtastung der zweiten Magnetspur dienen, so dass über eine Auswerteeinheit die Bestimmung der Drehwinkelstellung aus den Ausgangssignalen der Magnetfeldsensoren und der Magnetfeldschalter möglich ist.

Drehwinkelbestimmungsvorrichtungen mit Sensoreinheiten, die als Potentiometer ausgeführt sind, unterliegen einem Verschleiß und sind störanfällig. Ferner ist die Messgenauigkeit ist auf einige Winkelgrade begrenzt. Sensoreinheiten, die auf einem magnetischen Messprinzip beruhen, können sich gegenseitig negativ beeinflussen, was eine Verfälschung des Messergebnisses bewirken kann. Magnetisch wirkende Sensoreinheiten können als anisotrope magnetoresistive Sensoren (AMR) oder als giant magnetoresistive Sensoren (GMR) ausgeführt werden, wobei ferner Sensoren bekannt sind, die auf der Hall-Technologie beruhen. Derartige Messtechnologien benötigen zur Messung mindestens ein Antriebs- und mindestens zwei Abtriebszahnräder, um einen Messbereich zu realisieren, der größer als 360° ist. Dabei können zwei AMR- bzw. zwei GMR-Sensoren miteinander gekoppelt eingesetzt werden. Die beiden erhaltenen Signale werden dann mithilfe des Vernier-(Nonius)-Algorithmus zu einem einzigen Winkelsignal verrechnet. Durch das im Getriebe vorhandene Getriebespiel haben diese Winkelsensoren eine relativ grobe Genauigkeit im Bereich von etwa 2° bis 2,5°. Zudem verursacht die Nutzung von zwei Zahnrädern laute Laufgeräusche, so dass häufig Schmiermittel eingesetzt werden müssen, wobei wiederum die maximal mögliche Einsatztemperatur begrenzt ist. Ferner sind derartige magnetisch wirkende Sensoreinheiten aufgrund der eingesetzten Magnetkörper hysteresebehaftet. Auch der Einsatz zusätzlicher Temperaturkompensation zum Ausgleich thermischer Einflüsse ist notwendig. Ferner können externe Magnetfelder eine störende Wirkung auf die Messung mit dem magnetischen Sensoreinheiten in nicht unerheblichem Maß bewirken.

Ferner sind optische Sensoren bekannt, deren Messgenauigkeit ebenfalls begrenzt ist und die ein aufwendiges und damit teures Herstellungsverfahren für eine genaue Herstellung notwendiger Codespuren zur Erhöhung der Messgenauigkeit benötigen. Zudem sind diese Sensoren extrem schmutz- und ebenfalls temperaturempfindlich, was sich insbesondere in Verschleißerscheinungen und Alterung bemerkbar macht. Optische Sensoren besitzen ferner einen vergleichweise großen Durchmesser, so dass der erforderliche Bauraum der gesamten Vorrichtung vergrößert werden muss. Rein induktiv messende Sensoren hingegen können derzeit lediglich einen Messbereich von maximal 360° abdecken. Die Kombination zweier induktiv messender Systeme nach dem Vorbild der magnetischen Sensoren ist ebenfalls nur bedingt möglich, da sich beide Systeme ebenfalls gegenseitig beeinflussen können bzw. eine gegenseitige Beeinflussung nicht ausgeschlossen werden kann.

Es ist daher die Aufgabe der vorliegenden Erfindung, eine Drehwinkelbestimmungsvorrichtung zur Bestimmung der Drehwinkelstellung einer drehbewegten Welle zu schaffen, durch die die Nachteile des vorgenannten Standes der Technik überwunden werden und die einfach ausgeführt ist und eine genaue Messung über einen Winkelbereich von > 360° ermöglicht.

Diese Aufgabe wird ausgehend von einer Drehwinkelbestimmungsvorrichtung zur Bestimmung der Drehwinkelstellung einer drehbewegten Welle gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Sensoreinheiten mindestens einen induktiv wirkenden Sensor und mindestens einen magnetisch wirkenden Sensor aufweisen.

Die Erfindung geht dabei von einer Kombination verschieden ausgeführter Sensoreinheiten aus, die sich nicht gegenseitig beeinflussen können. Vorteil der Kombination eines magnetisch wirkenden Sensors mit einem induktiv wirkenden Sensor ist die Nutzung von zwei völlig unabhängig voneinander arbeitenden Messprinzipien. Damit wird ein Höchstmaß an Sicherheit erreicht, da mehrere unabhängige Kanäle zur Signalauswertung zur Verfügung stehen und in unterschiedlichen Kombinationen miteinander ausgewertet werden können. Besonders vorteilhaft ist die Auswertung der Signale über den Vernier-(Nonius)-Algorithmus, wobei mindestens zwei Kanäle zur Signalauswertung zur Verfügung stehen müssen. Ein weiterer Vorteil ergibt sich aus der Anwendung der induktiven Sensoren als Feinspur des Vernier-(Nonius)-Algorithmus bei hohen Temperaturen, ohne dass eine Temperaturkompensation notwendig ist. Ferner ist sowohl ein magnetisch wirkender Sensor als auch ein induktiv wirkender Sensor schmutzunempfindlich. Gegenüber rein magnetisch wirkenden Sensoren bietet die vorgeschlagene Sensorkombination den Vorteil einer sehr genauen Messung.

Eine vorteilhafte Ausführungsform der erfindungsgemäßen Vorrichtung umfasst einen induktiv wirkenden Sensor, der mit dem Hauptrotor zusammenwirkt, wobei der magnetisch wirkende Sensor mit dem Zusatzrotor zusammenwirkt. Der induktiv wirkende Sensor kann nach Art eines CIPOS (Contactless Inductive Position Sensor) ausgebildet sein, wie dieser beispielsweise aus der Patentanmeldung DE 197 38 836 A1 der Anmelderin bekannt ist. Das Prinzip des hierin betrachteten Induktivsensors beruht auf der induktiven Auskopplung von Energie in ein bewegliches Element, welches wiederum induktiv auf Empfangsleiterschleifen mit einer speziellen Geometrie zurückwirkt. Die Geometrie der Empfangsleiterschleifen wird dabei so gewählt, dass die in der Empfangsleiterschleife induzierte Spannung von der Position des beweglichen Elementes abhängt. Hierfür umfasst die erste, induktiv wirkende Sensoreinheit einen mit dem Hauptrotor mitdrehenden Induktionsrotor, der das bewegliche Element bildet, und einen Stator, der die Empfangsleiterschleifen trägt. Der Stator kann vorzugsweise auf einem Trägerkörper angeordnet sein, der zugleich einen Gehäuseteil der gesamten Vorrichtung bildet, wobei der Induktionsrotor an einem tellerartigen Kragen am Hauptrotor angeordnet ist und parallel beabstandet über dem Stator rotiert.

Vorteilhafterweise weist die zweite, magnetisch wirkende Sensoreinheit ein Sensorelement und einen Magnetkörper auf, wobei das Sensorelement zur Erkennung einer Bewegung des Magnetkörpers ausgebildet ist. Das Sensorelement kann als Hall-, AMR-, GMR- Sensor ausgeführt sein und auf dem Trägerkörper angeordnet werden. Hingegen wird der Magnetkörper im und/oder am Zusatzrotor angeordnet.

Eine vorteilhafte Ausführungsform ergibt sich aus einem rotationssymmetrischen Magnetkörper, der konzentrisch zur Rotationsachse des Zusatzrotors im und/oder an diesem angeordnet ist. Der Magnetkörper kann dabei diametral magnetisiert sein, so dass eine Sensierung der Rotation des rotationssymmetrischen Magnetkörpers durch den Hall-Sensor ermöglicht ist. Sowohl der Hauptrotor als auch der Zusatzrotor kann aus einem Kunststoff-Spritzgussteil ausgebildet sein, wobei vorteilhafterweise der Magnetkörper durch das Material des Zusatzrotors umspritzt wird. Der Magnetkörper kann aus einem hartferritischen Magneten, Seltenerdmagneten oder aus einem kunststoffgebundenen, hartferritischen oder Seltenerd- Magneten bestehen. Neben der umspritzten Anordnung des Magnetkörpers im Zusatzrotor kann dieser in eine geometrisch entsprechende Aussparung im Zusatzrotor eingeklebt werden. Der Magnetkörper kann zudem eine von der rotationssymmetrischen Form abweichende rechteckige oder quadratische Form besitzen.

Nach einer weiteren vorteilhaften Ausführungsform weist die Drehkopplung zwischen dem Hauptrotor und dem Zusatzrotor ein Getriebe mit einem ersten Zahnrad am Hauptrotor und einem zweiten Zahnrad am Zusatzrotor auf, wobei die Zahnräder vorzugsweise eine unterschiedliche Zähnezahl besitzen. Sowohl der Hauptrotor als auch der Zusatzrotor können durch den Körper des Zahnrades selbst gebildet sein, wobei die kragenförmige Anformung am Hauptrotor zur Aufnahme des Induktionsrotors der ersten, induktiv wirkenden Sensoreinheit plan auf einer Seitenfläche des ersten Zahnrades angebracht sein kann. Der Magnetkörper im zweiten Zahnrad kann nabenseitig aufgenommen sein, so dass das zweite Zahnrad durch den Körper des Zusatzrotors gebildet ist. Die Ausbildung der Zahnräder mit unterschiedlichen Zähnezahlen ist notwendig, um das Vernier-(Nonius)-Prinzip zur Bestimmung des absoluten Drehwinkels anzuwenden, wobei zur Ausbildung einer sehr genauen 360° Messung eine identische Zähnezahl vorgesehen sein kann.

Die vorgeschlagene Drehwinkelbestimmungsvorrichtung kann zur Bestimmung eines Lenkungswinkels der Lenkung eines Kraftfahrzeugs angewendet werden, so dass die drehbewegte Welle eine Lenkungswelle des Kraftfahrzeugs ist oder mit dieser wenigstens drehgekoppelt angeordnet wird.

Die vorgeschlagene Drehwinkelbestimmungsvorrichtung kann ferner ein Bestandteil einer Drehmomentbestimmungsvorrichtung darstellen, wie diese auf bekannte Weise in elektronischen Lenkungssystemen (EPS-Lenkungssystem) angewendet werden. Zur Ausführung der Drehwinkelbestimmungsvorrichtung als Bestandteil einer Drehmomentbestimmungsvorrichtung ist lediglich eine weitere, induktiv wirkende Sensoreinheit erforderlich, die über ein Torsionselement mit der drehbewegten Welle der vorliegenden Vorrichtung gekoppelt wird. Die genannten Vorteile der Drehwinkelbestimmungsvorrichtung treffen folglich auch auf eine Drehmomentbestimmungsvorrichtung mit einer ersten Sensoreinheit und einer zweiten Sensoreinheit zu, wobei wenigstens eine weitere Sensoreinheit über eine Torsionskopplung mit der voranstehend beschriebenen Drehwinkelbestimmungsvorrichtung vorgesehen ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel der erfindungsgemäßen Drehwinkelbestimmungsvorrichtung in einer quergeschnittenen Seitenansicht und
- Figur 2: eine Draufsicht der erfindungsgemäßen Drehwinkelbestimmungsvorrichtung gemäß der Figur 1.

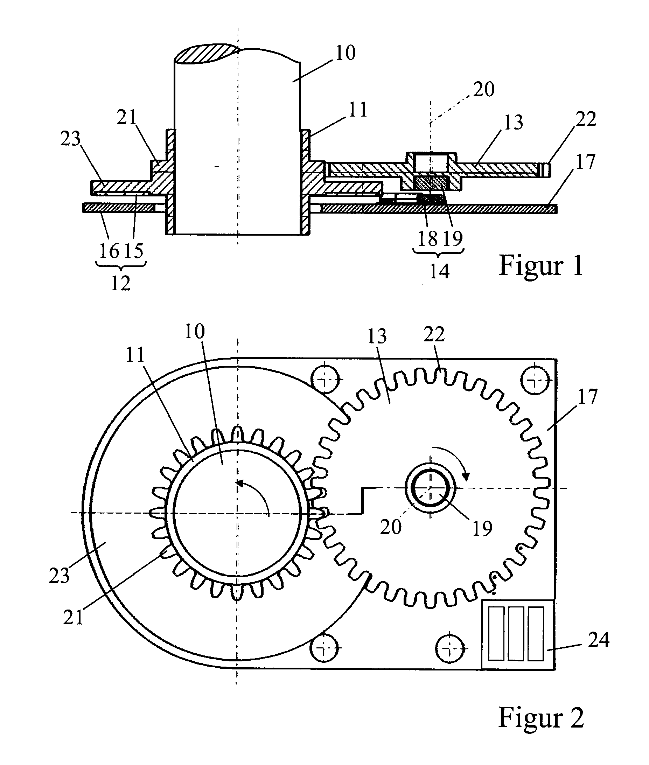

Figur 1 zeigt ein Ausführungsbeispiel einer Drehwinkelbestimmungsvorrichtung 1 gemäß der vorliegenden Erfindung. Die Vorrichtung 1 dient zur Bestimmung der Drehwinkelstellung einer drehbewegten Welle 10, die Bestandteil eines Lenkungssystems eines Kraftfahrzeugs sein kann und drehbeweglich mit einer Lenkungswelle verbunden ist. Auf der drehbewegten Welle 10 ist ein Hauptrotor 11 aufgebracht, der mit der drehbewegten Welle 10 mitdreht. Der Hauptrotor 11 besitzt einen Kragenbereich 23, wobei auf einer Planfläche des Kragenbereichs ein Induktionsrotor 15 aufgebracht ist. Der Kragenbereich 23 mit dem Induktionsrotor 15 erstreckt sich parallel beabstandet zu einem Trägerkörper 17, auf den ein Stator 16 aufgebracht ist. Der Induktionsrotor 15 und der Stator 16 bilden eine erste Sensoreinheit 12, die nach Art eines induktiv wirkenden Sensors ausgeführt ist. Das Prinzip des induktiv wirkenden Sensors beruht darauf, dass induktiv ausgekoppelte Energie in den Induktionsrotor 15 einfließt, der wiederum induktiv mit dem Stator 16 zusammenwirkt, der Empfangsleiterschleifen mit einer speziellen Geometrie aufweist. Die Empfangsleiterschleifen sind zur Bildung des Stators 16 auf der Oberfläche des Trägerkörpers 17 aufgebracht und erstrecken sich radial um die Rotationsachse des Hauptrotors 11. Die Geometrie der Empfangsleiterschleifen ist so gewählt, dass die in der Empfangsleiterschleife induzierte Spannung von der rotatorischen Position des Induktionsrotors 15 abhängt. Somit kann die induktiv wirkende erste Sensoreinheit 12 direkt den Drehwinkel der drehbewegten Welle 10 messen.

Die Drehwinkelbestimmungsvorrichtung 1 umfasst ferner einen mit dem Hauptrotor 11 drehgekoppelten Zusatzrotor 13. Zur Bestimmung der Drehwinkelstellung des Zusatzrotors 13 ist eine zweite Sensoreinheit 14 vorgesehen, die als magnetisch wirkender Sensor ausgebildet ist. Diese zweite, magnetisch wirkende Sensoreinheit 14 weist ein Sensorelement 18 und einen Magnetkörper 19 auf, wobei das Sensoelement 18 zur Erkennung einer Bewegung des Magnetkörpers 19 ausgeführt ist. Das Sensorelement 18 kann als Hall-, AMR- oder GMR- Sensor 18 ausgebildet sein und auf dem Trägerkörper 17 angeordnet werden. Der Magnetkörper 19 kann dabei im Zusatzrotor 13 angeordnet werden, wobei der Zusatzrotor 13 eine Aufnahmevertiefung aufweist, in die der Magnetkörper 19 eingeklebt wird. Der Magnetkörper 19 kann aus einem Hartferriten, Seltenerdmagneten oder einem kunststoffgebundenen Magneten bestehen und gemäß bekannter Spritzgussverfahren mit dem Material des Zusatzrotors 13 verspritzt werden.

Die Drehkopplung zwischen dem Hauptrotor 11 und dem Zusatzrotor 13 umfasst ein Getriebe mit einem ersten Zahnrad 21 am Hauptrotor 11 und einem zweiten Zahnrad 22 am Zusatzrotor 13, wobei die Zahnräder 21 und 22 eine unterschiedliche Zähnezahl aufweisen. Vorliegend ist das zweite Zahnrad 22 mit einem größeren Durchmesser ausgeführt als das erste Zahnrad 21, so dass der Zusatzrotor 13 langsamer dreht als der mit der drehbewegten Welle 10 angetriebene Hauptrotor 11. Die Drehbewegung des Zusatzrotors 13 erfolgt um eine Rotationsachse 20, wobei der Magnetkörper 19 rotationssymmetrisch ausgeführt ist und konzentrisch zur Rotationsachse 20 im Zusatzrotor 13 eingebracht ist. Beabstandet zum Magnetkörper 19 befindet sich das Sensorelement 18 auf dem Trägerkörper 17, der als Hall-, AMR- oder GMR-Sensor 18 ausgeführt ist. Der Magnetkörper 19 ist diametral magnetisiert, so dass die Rotationsbewegung des zylinderförmig ausgeführten Magnetkörpers 19 durch den Hall-, AMR- oder GMR-Sensor 18 ermittelt werden kann.

Figur 2 zeigt eine Draufsicht auf die Drehwinkelbestimmungsvorrichtung 1 gemäß Figur 1. Wie in der Draufsicht erkennbar ist, erstreckt sich der Hauptrotor 11 um die drehbewegte Welle 10, wobei der Hauptrotor 11 ein erstes Zahnrad 21 besitzt, das mit einem zweiten Zahnrad 22 kämmt. Das zweite Zahnrad 22 ist auf dem Zusatzrotor 13 aufgebracht bzw. durch dieses gebildet, der um die Rotationsachse 20 drehbar ist. Auf nicht weiter gezeigte Weise kann der Zusatzrotor 13 drehbar auf dem Trägerkörper 17 aufgenommen sein, beispielsweise durch eine Nadellagerung.

Gemäß einer schematischen Darstellung umfasst die Drehwinkelbestimmungsvorrichtung 1 ferner eine Auswerteeinheit 24, die ebenfalls auf dem Trägerkörper 17 aufgenommen sein kann. Die Auswerteeinheit 24 empfängt sowohl das Signal der ersten Sensoreinheit als auch der zweiten Sensoreinheit, und stellt auf Grundlage des Vernier-Prinzips eine Information über den Drehwinkel der drehbewegten Welle 10 zur Verfügung. Der Messbereich ist dabei größer als 360°, so dass ein Messbereich bereitgestellt wird, der über eine Vollkreisdrehung der drehbewegten Welle 10 hinausgeht. Durch Ergänzung der ersten induktiv wirkenden Sensoreinheit um eine weitere induktive Messspur kann die Genauigkeit der Drehwinkelbestimmungsvorrichtung weiter erhöht werden. Dabei kann auch das erreichbare Sicherheitslevel der Drehwinkelbestimmungsvorrichtung durch die zusätzlich hinzukommende Redundanz mehrere induktiv wirkender Sensoreinheiten erhöht werden.

Die Erfindung beschränkt sich in Ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein. Insbesondere kann die auf dem Hauptrotor 11 angeordnete erste Sensoreinheit 12 als magnetisch wirkender Sensor und die auf dem Zusatzrotor 13 angeordnete zweite Sensoreinheit als induktiv wirkender Sensor ausgeführt sein. Ferner kann das erste Zahnrad 21 größer ausgeführt sein als das zweite Zahnrad 22, so dass der Zusatzrotor 13 eine größere Drehgeschwindigkeit besitzt als der Hauptrotor 11. Ferner besteht die Möglichkeit, betreffend die erste Sensoreinheit 12 den Induktionsrotor 15 ortsfest auf den Trägerkörper 17 anzuordnen, wobei der Stator 16 mit dem Hauptrotor 11 rotiert. Ferner kann der Hall-, AMR- oder GMR-Sensor 18 im Zusatzrotor 13 eingebracht sein, so dass der Magnetkörper 19 ruhend auf dem Trägerkörper 17 angeordnet wird. Des Weiteren kann das Getriebe, gebildet durch die Zahnräder 21 und 22, als Zahnriementrieb ausgeführt sein.

Bezugszeichenliste
- 1: Drehwinkelbestimmungsvorrichtung
- 10: drehbewegte Welle
- 11: Hauptrotor
- 12: erste Sensoreinheit
- 13: Zusatzrotor
- 14: zweite Sensoreinheit
- 15: Induktionsrotor
- 16: Stator
- 17: Trägerkörper
- 18: Sensorelement, Hall- AMR- oder GMR Sensor
- 19: Magnetkörper
- 20: Rotationsachse
- 21: erstes Zahnrad
- 22: zweites Zahnrad
- 23: Kragenbereich
- 24: Auswerteeinheit

## Patentansprüche

1. Drehwinkelbestimmungsvorrichtung (1) zur Bestimmung der Drehwinkelstellung einer drehbewegten Welle (10), aufweisend:
einen mit der drehbewegten Welle (10) gekoppelter Hauptrotor (11),
an dem zur Bestimmung der Drehwinkelstellung des Hauptrotors (11) eine erste Sensoreinheit (12) angeordnet ist,
einen mit dem Hauptrotor (11) drehgekoppelter Zusatzrotor (13),
an dem zur Bestimmung der Drehwinkelstellung des Zusatzrotors (13) eine zweite Sensoreinheit (14) angeordnet ist,
**dadurch gekennzeichnet, dass** die Sensoreinheiten (12, 14) mindestens einen induktiv wirkenden Sensor und mindestens einen magnetisch wirkenden Sensor aufweisen.

2. Drehwinkelbestimmungsvorrichtung (1) nach Anspruch 1, **dadurch gekennzeichnet, dass** die erste am Hauptrotor (11) angeordnete Sensoreinheit (12) als induktiv wirkender Sensor und die zweite am Zusatzrotor (13) angeordnete Sensoreinheit (14) als magnetisch wirkender Sensor ausgebildet ist.

3. Drehwinkelbestimmungsvorrichtung (1) nach Anspruch 1 oder 2, **dadurch gekennzeichnet, dass** die erste, induktiv wirkende Sensoreinheit (12) einen mit dem Hauptrotor (11) mitdrehenden Induktionsrotor (15) und einen ruhenden Stator (16) aufweist.

4. Drehwinkelbestimmungsvorrichtung (1) nach Anspruch 3, **dadurch gekennzeichnet, dass** ein Trägerkörper (17) vorgesehen ist, auf dem der Stator (16) im wesentlichen parallel beabstandet zum Induktionsrotor (15) aufgenommen ist.

5. Drehwinkelbestimmungsvorrichtung (1) nach einem der vorgenannten Ansprüche, **dadurch gekennzeichnet, dass** die zweite, magnetisch wirkende Sensoreinheit (14) ein Sensorelement (18) und einen Magnetkörper (19) aufweist, wobei das Sensorelement (18) zur Erkennung einer Bewegung des Magnetkörpers (19) ausgebildet ist.

6. Drehwinkelbestimmungsvorrichtung (1) nach Anspruch 5, **dadurch gekennzeichnet, dass** das Sensorelement (18) als Hall-, GMR- oder AMR-Sensor (18) ausgebildet und auf dem Trägerkörper (17) angeordnet ist.

7. Drehwinkelbestimmungsvorrichtung (1) nach Anspruch 5 oder 6, **dadurch gekennzeichnet, dass** der Magnetkörper (19) im und/oder am Zusatzrotor (13) angeordnet ist.

8. Drehwinkelbestimmungsvorrichtung (1) nach Anspruch 5 bis 7, **dadurch gekennzeichnet, dass** der Magnetkörper (19) als rotationssymmetrischer Magnetkörper (19) ausgebildet ist und konzentrisch zur Rotationsachse (20) des Zusatzrotors (13) im und/oder an diesem angeordnet ist.

9. Drehwinkelbestimmungsvorrichtung (1) nach einem der vorgenannten Ansprüche, **dadurch gekennzeichnet, dass** die Drehkopplung zwischen dem Hauptrotor (11) und dem Zusatzrotor (13) ein Getriebe mit einem ersten Zahnrad (21) am Hauptrotor (11) und einem zweiten Zahnrad (22) am Zusatzrotor (13) aufweist, wobei die Zahnräder (21, 22) vorzugsweise eine unterschiedliche Zähnezahl aufweisen.

10. Drehwinkelbestimmungsvorrichtung (1) nach einem der vorgenannten Ansprüche, **dadurch gekennzeichnet, dass** die drehbewegte Welle (10) eine Lenkungswelle eines Kraftfahrzeugs ist oder mit dieser wenigstens drehgekoppelt ist.
